# EUROPEAN PATENT APPLICATION

(11) **EP 4 636 243 A1**
(43) Date of publication of application: **22.10.2025**
(21) Application number: 24382423.2
(22) Date of filing: 19.04.2024
(51) Int. Cl.: F03D 1/02, F03D 1/04

(54) **WIND TURBINE GENERATOR**

(71) Applicant: Muñoz I Pol, Lluís, Bundoran, Co. Donegal (IE); Ruiz Lacalle, Valentin, Bundoran, Co. Donegal (IE)
(72) Inventor: Muñoz I Pol, Lluís, Bundoran, Co. Donegal (IE); Ruiz Lacalle, Valentin, Bundoran, Co. Donegal (IE)

(57) **Abstract**

A wind turbine comprising a stator which has a plurality of vertical baffles which are mutually inclined and define a substantially pyramidal or conical internal chamber for the rotation of N rotors provided with rotary support means and with a plurality of V vertical vanes which are mutually inclined and distributed with a constant spacing, the outer edges of said vanes being adapted to skim the inner surface of the chamber.

## Description

A wind turbine, comprising a stator which has a plurality of vertical baffles, VB, which are mutually inclined and form a substantially pyramidal or conical chamber for the rotation of N rotors provided with rotary support means and with a plurality of V vertical vanes which are mutually inclined and distributed with a constant spacing, the outer edges of the vanes being adapted to skim the inner surface of the chamber.

### Description

The present invention relates to a wind turbine. It is known that the utilization of wind power to produce clean electric energy, i.e. with no emissions of environmental pollutants, is currently based mainly on the use of propeller-like turbines which have a horizontal rotation axis and utilize lift, which is a physical phenomenon that occurs when a wind stream strikes a wing-shaped surface.

These turbines are not devoid from drawbacks, including the fact that they are extremely expensive, they are unable to adequately utilize rapidly varying winds, require the replacement of the more expensive components in order to vary the amount of electric power produced, and therefore in order to meet the requirements of different users, and are particularly noisy.

The aim of the present invention is to eliminate the above drawbacks of the known art, by providing a turbine which can produce electric power without causing environmental pollutant emissions, can use winds having rapidly variable directions and meet the requirements of different users with a low cost, and can be easily adapted to the dimensions of the space available.

Within the scope of this aim, a further object of the present invention is to achieve the above aim with a structure which is simple, relatively easy to provide in practice, safe in use, effective in operation and relatively low in cost.

This aim and this object are both achieved by the present wind turbine, characterized in that it comprises a stator which has a plurality of vertical baffles which are mutually inclined and define a substantially pyramidal or conical chamber for the rotation of N rotors provided with rotary support means and with a plurality of V vertical vanes which are mutually inclined and distributed with a constant spacing, the outer edges of the vanes being adapted to skim the inner surface of the chamber and the themselves rotors.

Further characteristics and advantages of the present invention will become apparent from the detailed description of a preferred but not exclusive embodiment of a wind turbine, illustrated only by way of non-limitative example in the accompanying drawings, wherein:
Figure 1 is a schematic plan view of the wind turbine generator where the chamber is pyramidal, i.e. VB equal to 4 and the number of rotors N is equal to 3 according to the invention;
Figure 2 is a front view of the rotor of Figure 1;

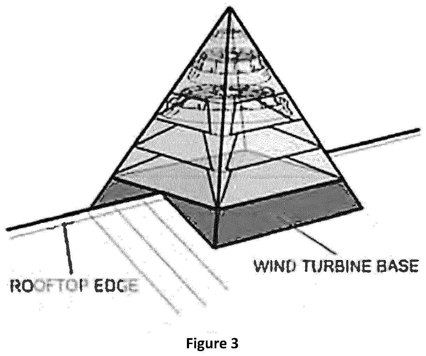

Figure 3 is a schematic plan view of a physical arrangement of the turbine according to the invention;

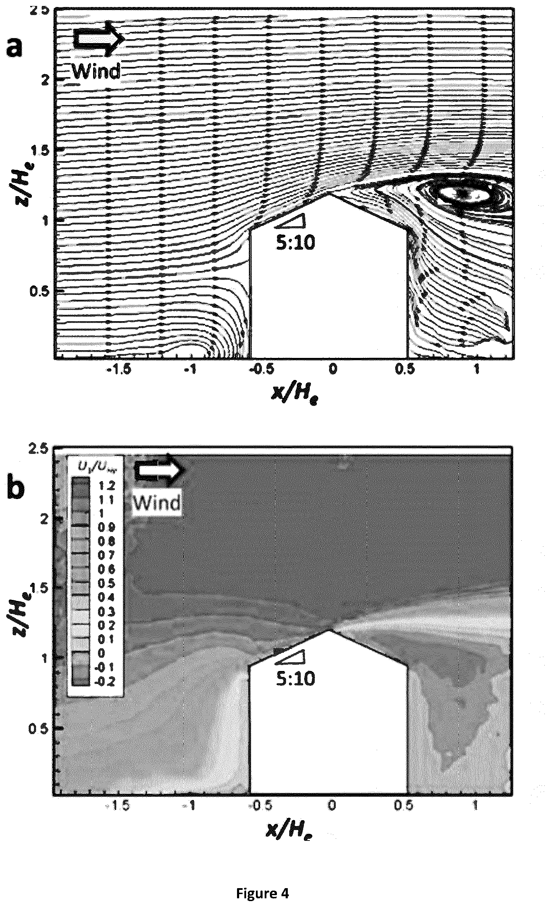

Figure 4 is an aerodynamic graph of the physical arrangement of the turbine according to the invention;

With reference to the above Figures, it generally designates a wind turbine according to the invention.

The turbine is constituted by a pyramidal or conical stator inside which there are the horizontal rotors.

The rotor is constituted by a hollow body with a vertical axis, along the inner part of which there are multiple mutually inclined V vanes which are distributed with a constant spacing and whose outer edges are adapted to skim the inner surface of the pyramidal chamber and the rotor itself.

The vanes, actuated by the wind, cause the rotation of the rotor and are constituted by vertical rectangular laminae which can have different curvatures with respect to the horizontal plane.

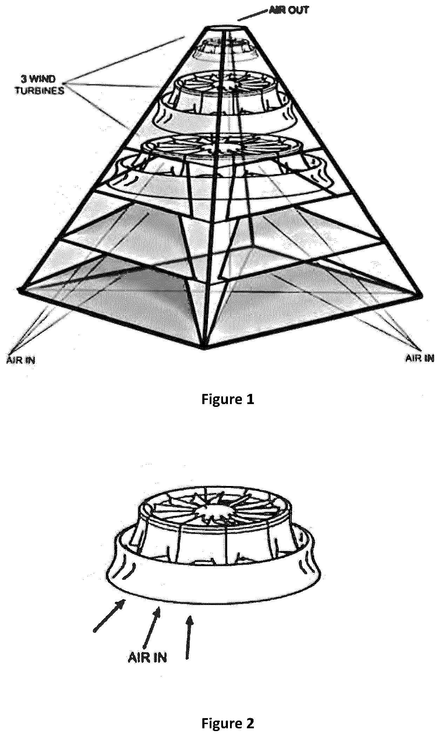

The vanes shown in Figures 1 and 2 are joined one another so that the inner edge of each vane rests on a main vertical shaft and an outer structural ring, have a flattened-shaped curvature.

The fundamental parameters for defining the characteristics of the turbine according to the invention are the number of vertical baffles (VB), the number of rotors (N), the number of vanes (V), the ratio between the height (H) and the diameter (D) of the rotors, and the ratio between the side of the pyramidal enclosure and the diameter of the rotors.

In the case of a radial turbine, operation does not vary as the direction of the wind changes and therefore there is no need to provide particular devices for adapting the turbine to the changes in wind direction.

A possible application of the turbine is as follows: fitted on the rooftop edge of a house or mountain or an open flat surface in a house or outdoors; the electric power produced can be used to supply the electrical grid and/or recharge the batteries.

Since the rotor is a dynamic element, it is made of very light and strong materials which are accordingly expensive, while the stator, being a static element, can be manufactured with robust low-cost materials.

The connection baffles and the inner pyramidal stator constitute a sort of funnel into which the wind is forced in order to pass through the turbine rotors.

Accordingly, considerable manufacturing cost savings are achieved because the production of new stators allows the use of materials which are undoubtedly less expensive than the lighter and stronger ones required to produce the rotors.

The invention further allows to utilize both winds having a constant direction and winds whose direction varies rapidly, and easily adapts to the characteristics of the space available.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the scope of the protection of the appended claims.

## Claims

1. A wind turbine, **characterized in that** it comprises a stator which has a plurality of vertical baffles which are mutually inclined and define a substantially pyramidal or conical internal chamber for the rotation of N rotors provided with rotary support means and with a plurality of V vertical vanes which are mutually inclined and distributed with a constant spacing, the outer edges of said vanes being adapted to skim the inner surface of the chamber.

2. The turbine according to claim 1, **characterized in that** said baffles are substantially rectangular laminae which define respective ducts which so converge towards the chamber and are adapted to increase the speed of the inflowing wind.

3. The turbine according to any one of the preceding claims, **characterized in that** said stator comprises a pyramid with a lower plate for supporting said baffles.

4. The turbine according to any one of the preceding claims, **characterized in that** said rotors are constituted by a hollow body with a vertical axis along the inner part of which said vanes are distributed.

5. The turbine according to any one of the preceding claims, **characterized in that** the vanes are constituted by substantially rectangular laminae which have, with respect to the horizontal plane, curvatures shaped like a flattened circular arc.

6. The turbine according to any one of the preceding claims, **characterized in that** the vanes are joined to the inner edge of each vane resting on a main vertical shaft and an outer structural ring.

7. The turbine according to any one of the preceding claims, **characterized in that** said baffles are arranged so as to be tangent to the rotors.

8. The turbine according to claim 1, **characterized in that** said pyramidal or conical chamber is central, the rotors being adapted to utilize winds having a variable direction.

9. The turbine according to any one of the preceding claims, **characterized in that** the vertical axis of the rotor can be connected to a dynamo or to an alternator.

10. The turbine according to any one of the preceding claims, **characterized in that** it is adapted to utilize flows of gaseous and/or liquid fluids.
